# FASCICULE DE BREVET EUROPEEN

(11) **EP 2 845 180 B1**
(45) Date de publication et mention de la délivrance du brevet: **22.08.2018**
(21) Numéro de dépôt: 13719805.7
(22) Date de dépôt: 24.04.2013
(51) Int. Cl.: G08G 5/00, G08G 5/04, G05D 1/10, G01S 13/93, G01S 13/92

(54) **PROCÉDÉ D'ÉVITEMENT D'UN AÉRONEF ET DRÔNE ÉQUIPÉ D'UN SYSTÈME METTANT EN OEUVRE CE PROCÉDÉ**
FLUGZEUGAUSWEICHVERFAHREN SOWIE DROHNE MIT EINEM SYSTEM ZUR DURCHFÜHRUNG DES VERFAHRENS
AIRCRAFT AVOIDANCE METHOD, AND DRONE PROVIDED WITH A SYSTEM FOR IMPLEMENTING SAID METHOD

(30) Priorité: 02.05.2012 FR 1254032
(43) Date de publication de la demande: 11.03.2015
(73) Titulaire: Safran Electronics & Defense, 92100 Boulogne-Billancourt (FR)
(72) Inventeur: FARJON, Julien, F-92100 Boulogne-Billancourt (FR)
(74) Mandataire: Lavialle, Bruno François Stéphane
(86) Numéro de dépôt international: PCT/EP2013/058553
(87) Numéro de publication internationale: WO 2013/164237

(56) Documents cités:
- EP-A1- 1 372 127
- US-A1- 2009 027 253
- US-A1- 2010 039 310
- US-A1- 2010 292 871
- US-A1- 2011 118 980
- US-A1- 2011 160 950

## Description

La présente invention concerne la prévention des collisions entre aéronefs et plus particulièrement un procédé de détermination de trajectoire d'évitement d'aéronefs compatible avec les systèmes d'évitement ACAS équipant les aéronefs commerciaux civils.

L'invention a également pour objet un drone pourvu d'un système mettant en oeuvre un procédé de détermination de trajectoire d'évitement d'un aéronef piloté.

### Etat de la technique

Un drone aérien est un aéronef sans pilote humain à bord. Cet aéronef peut être pourvu de systèmes automatisés et réaliser son vol de façon autonome, il peut également être pourvu de capteurs et être commandé à distance par un pilote depuis le sol. Les drones aériens sont de plus en plus utilisés dans le domaine militaire, notamment pour la surveillance des champs de bataille, la reconnaissance voire l'attaque au sol.

Il a été envisagé d'utiliser de tels drones dans le domaine civil pour réaliser des misions de surveillance ou de reconnaissance. Ces drones sont en effet intéressants car ils disposent d'une grande autonomie de vol mais pâtissent d'une faible manoeuvrabilité, particulièrement en ce qui concerne leur capacité à monter ou descendre. L'absence de pilote à bord interdit au drone de pouvoir satisfaire aux règles de l'air en vigueur dans l'espace aérien civil, règles qui prévoient en particulier qu'un aéronef puisse assurer une fonction « voir et éviter » aux fins de l'évitement des collisions. Ainsi les drones ne sont ils pas autorisés à voler dans l'espace aérien non ségrégué, c'est-à-dire aux mêmes endroits et mêmes moments que les aéronefs civils pourvus d'un pilote humain à bord.

On connaît un système d'anti-collision qui est destiné à équiper certains aéronefs pilotés autorisés à voler aux instruments. Ce système est connu sous le nom de TCAS et correspond au standard ACAS défini par la convention sur l'aviation international civile. En Europe, tous les avions commerciaux avec plus de dix-neuf sièges passagers doivent être obligatoirement équipés de la version II de ce système intégrant un transpondeur de mode S. Le système est agencé pour récupérer des informations sur le cap et la position de tout aéronef situé à une distance variant entre 2,5 (4 km) et 30 miles (48 km). Ces informations comprennent principalement la distance avec ces aéronefs, leur altitude pression et une information approximative d'azimut. Les aéronefs détectés sont appelés « aéronefs intrus ». Les informations sont récupérées par interrogation du transpondeur -de mode S ou de type mode S- de l'aéronef intrus et sont utilisées par le système TCAS II pour déterminer si une collision avec cet aéronef intrus est possible. Par collision, on comprendra un croisement des aéronefs à des distances inférieures à des critères dont les valeurs sont entrées au préalable dans le système. La priorité est donnée au système TCAS II (nommé alors TCAS « maître ») de l'appareil qui est le premier entré en contact avec le système TCAS II (nommé alors TCAS « esclave ») de l'autre appareil. En cas de collision potentielle détectée par le système TCAS, le pilote de chaque aéronef est informé par une alerte auditive émise dans la cabine de pilotage. Une telle alerte est appelée « Traffic Advisory ». Si, suite à cette alerte, le risque de collision n'est pas réduit et que la collision semble imminente, le TCAS maître détermine la manoeuvre d'évitement à effectuer par l'avion qu'il équipe et transmet un avis de résolution contenant cette information au TCAS esclave qui détermine à son tour une manoeuvre d'évitement compatible. Chaque avis, appelé « Resolution Advisory » ou RA, est également transmis au pilote concerné par le biais d'un afficheur intégré aux instruments de navigation et est doublé d'une alerte auditive. L'avis indique l'aéronef intrus concerné par l'alerte ainsi qu'une consigne de manoeuvre au pilote : maintenir la trajectoire actuelle, monter, descendre ou surveiller la vitesse verticale. Le TCAS esclave, ayant reçu le RA du TCAS maître, émet à l'intention de son pilote une consigne de manoeuvre compatible. Dans la majorité des situations, le système TCAS II préconise à l'un des aéronefs de monter et à l'autre de descendre, ce qui a pour effet d'augmenter très rapidement la distance séparant les deux aéronefs. Pour son bon fonctionnement, le système TCAS II nécessite que l'aéronef qui en est équipé dispose de performances minimales en terme de vitesse de montée et de descente.

Des systèmes et méthodes anti-collisions sont connus par exemple des documents US 2011/160950 A1, EP 1 372 127 A1 et US 2010/039310 A1.

La faible manoeuvrabilité des drones en montée et en descente, ainsi que l'absence de pilote capable d'interpréter les instructions du système TCAS II, ne permettent pas de faire circuler les drones aériens dans l'espace aérien non ségrégué et freine donc l'extension de leur utilisation à des domaines tels que la surveillance civile, la prévention d'incendies ou la sécurité routière. Une amélioration de la manoeuvrabilité des drones jusqu'aux niveaux requis pour effectuer les manoeuvres d'évitement prescrites par le système TCAS II augmenterait la masse et le coût de ces aéronefs et nuirait aux performances essentielles de tels appareils, particulièrement en terme d'autonomie, de vitesse minimale de vol, de bruit et de consommation de carburant.

### Objet de l'invention

Un but de l'invention est de doter un drone d'une fonction « voir et éviter », c'est-à-dire de le doter de la capacité d'éviter une collision avec un aéronef intrus.

### Exposé de l'invention

A cet effet, on prévoit, selon l'invention, un procédé d'évitement d'un aéronef intrus équipé d'un système TCAS par un drône aérien dépourvu d'un système TCAS selon les revendications 1 à 3. L'invention comprend également un drone pourvu d'un système de contrôle de vol agencé pour mettre en oeuvre le procédé d'évitement de l'invention.

### Brève description des figures

Il sera fait référence aux figures annexées, parmi lesquelles :
- la figure 1 est une vue schématique en perspective d'une situation de croisement d'un aéronef et d'un drone selon l'invention ;
- la figure 2 est un logigramme des événements déclenchés par la détection d'un aéronef intrus selon un premier mode de réalisation de l'invention ;
- la figure 3 est un logigramme des événements déclenchés par la détection d'un aéronef intrus selon un second mode de réalisation de l'invention ;

- la figure 4 est une vue schématique en perspective d'une situation de croisement d'un aéronef et d'un drone selon un troisième mode de réalisation de l'invention ;
- la figure 5 est un logigramme des événements déclenchés par la détection d'un aéronef intrus selon le mode de réalisation de la figure.

### Description détaillée d'au moins un mode de réalisation de l'invention

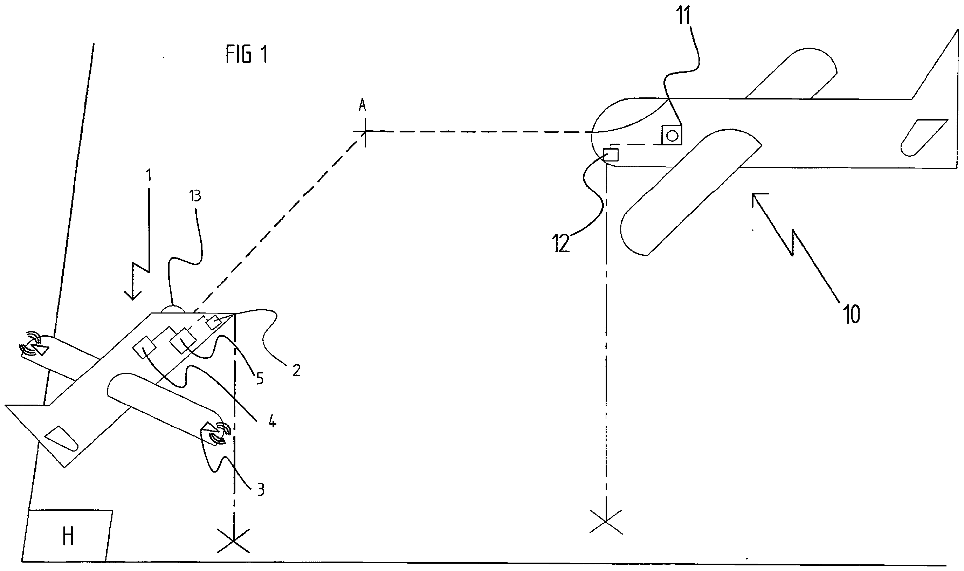

En référence à la figure 1, le drone aérien selon l'invention, généralement désigné 1, est un avion qui comprend un transpondeur mode S 2, un interrogateur de transpondeur 13, deux antennes à capacité goniométrique 3 placées chacune sur une des ailes du drone 1 ainsi qu'un système automatisé d'analyse de données 4 connecté à un système de contrôle de vol 5 comportant notamment un calculateur. Le drone 1 poursuit un cap qui croise, au point A, la trajectoire de vol d'un aéronef intrus 10 pourvu d'un système TCAS II, désigné 11 sur la figure, en lien avec un transpondeur mode S 12. La figure 1 comporte la représentation d'un plan horizontal H sur lequel sont projetées les positions des deux aéronefs 1 et 10.

Le système automatisé d'analyse de données 4 comprend une unité de calcul informatique agencé pour exécuter un programme informatique mettant en oeuvre un procédé de détermination d'une trajectoire d'évitement.

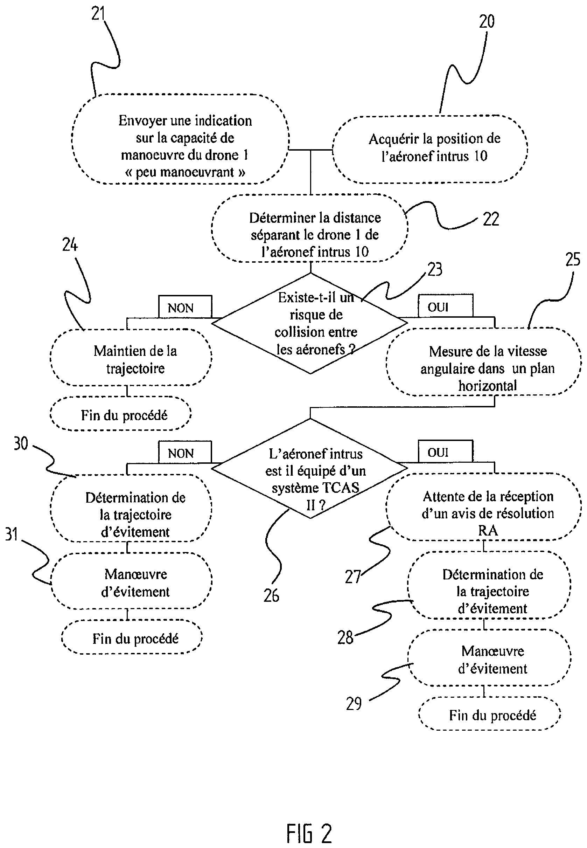

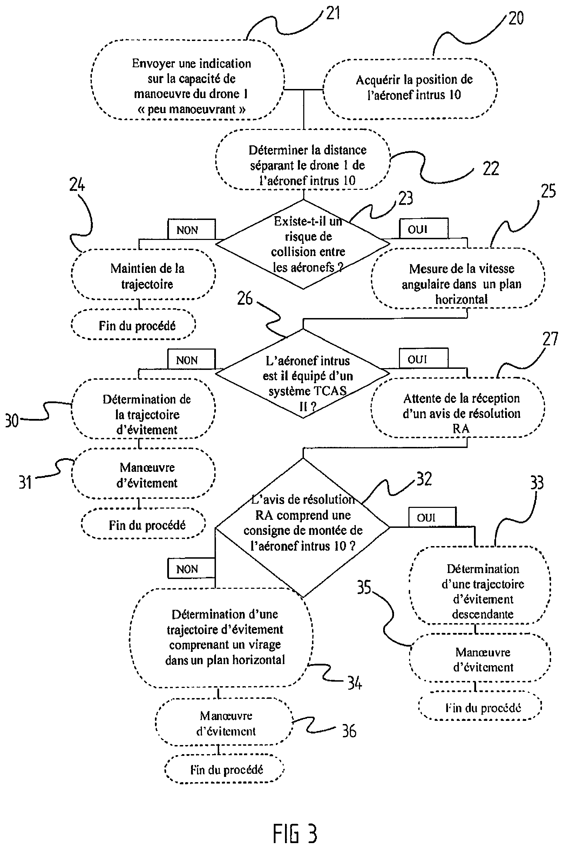

En référence aux figures 2 et 3, le procédé de détermination par le drone 1 d'une trajectoire d'évitement de l'avion 10 est décrit. Dans ces logigrammes, les formes oblongues désignent les instructions élaborées par le système d'analyse de données 4 du drone 1 et les losanges les opérations logiques effectuées par ce système d'analyse 4.

A l'entrée de l'avion intrus 10 dans la zone dans laquelle l'avion intrus 10 reçoit les signaux du transpondeur 2 de mode S du drone 1, ce dernier reçoit des informations sur la position et le cap de l'avion intrus 10 en réponse à un message émis par son transpondeur 2. Ceci correspond à l'étape 20 du logigramme. Parallèlement à la réception de ces informations, le drone 10 émet un message indiquant sa capacité à manoeuvrer (étape 21). Ici le drone indique «peu manoeuvrant».

Les informations relatives à l'avion intrus 10 sont traitées par le système d'analyse de données 4 qui détermine alors la distance séparant le drone 1 de l'avion intrus 10 (étape 22) ainsi que l'existence ou non d'un risque de collision (étape 23).

Si aucun risque de collision n'est détecté, le drone maintient sa trajectoire initiale (étape 24).

En cas de risque de collision, le système d'analyse 4 réalise une mesure précise de la vitesse angulaire de déplacement de l'avion 10 par rapport au drone 1 dans le plan horizontal H à l'aide des antennes à capacité goniométrique 3 (étape 25). La détermination de la position d'un engin émettant des ondes radio par des moyens radio tels que des antennes à capacité goniométrique est connue en soi.

Une fois cette vitesse angulaire acquise, le système d'analyse 4 détermine si l'avion 10 dispose d'un système TCAS II (étape 26). Cette détermination se fait par réception ou non d'une réponse de l'avion 10 à la première interrogation par le transpondeur 2 du drone 1.

Si le système détecte que l'avion 10 est équipé d'un système TCAS II, le système 4 attend alors l'émission d'un avis de résolution RA (étape 27) émis par le système TCAS II de l'avion 10 pour déterminer la trajectoire d'évitement (étape 28) et l'envoyer pour exécution au système de contrôle de vol 5 du drone 1 (étape 29). La manoeuvre correspondant à la trajectoire d'évitement déterminée par le système 4 est déclenchée après l'émission de l'avis de résolution RA par l'avion intrus 10 afin de ne pas perturber le fonctionnement du TCAS II. En effet, une manoeuvre effectuée avant que le TCAS II de l'avion intrus 10 ait déterminé une solution anti-collision est susceptible de dégrader la fonction de surveillance du système TCAS II. Ainsi, la trajectoire d'évitement déterminée par le drone 1 est exécutée en même temps que la manoeuvre d'évitement correspondant à l'avis de résolution RA donné par le TCAS II de l'avion 10. L'avis de résolution RA donnée par le TCAS II de l'avion intrus 10 étant un évitement vertical (instruction de monter ou de descendre), la trajectoire d'évitement déterminée par le système d'analyse de données 4 est comprise dans un plan horizontal, dans une direction prenant en compte la vitesse angulaire de l'avion intrus 10 ainsi que sa position au moment de l'émission de l'avis de résolution RA. Cette trajectoire permet d'assurer un éloignement rapide des deux aéronefs tout en garantissant que le déroulement simultané de ces deux manoeuvres ne puisse amener à une collision, ces manoeuvres ayant lieu selon des directions comprises dans des plans orthogonaux.

Si l'avion intrus 10 n'a pas répondu à la première interrogation par le transpondeur 2 du drone 1, le système d'analyse de données 4 interprète que l'avion intrus 10 n'est pas équipé du système TCAS II et détermine alors la trajectoire d'évitement (étape 30), pour une exécution dès que possible par le système de contrôle de vol 5 (étape 31). Cette trajectoire d'évitement peut comprendre des manoeuvres dans un plan vertical et/ou un plan horizontal. Selon un mode de réalisation particulièrement avantageux, la trajectoire d'évitement comprend un virage à droite dans un plan horizontal. Cette manoeuvre est conforme aux règles de l'air applicables aux conditions de vol à vue et correspond à la réaction attendue d'un aéronef classique dans de telles conditions.

On remarquera que, selon ce mode de réalisation, le contenu de l'avis de résolution RA est ignoré, seule l'émission de celui-ci est prise en compte dans le procédé.

En référence à la figure 3, un autre mode de mise en oeuvre du procédé de l'invention est décrit, pour le cas où le drone 1 disposerait de capacités de manoeuvre en descente compatibles avec les exigences du système TCAS II (par exemple vitesse de descente supérieure à 500 pieds/min, soit environ 150 mètres par minute) et que cette caractéristique a été entrée dans le système d'analyse de données 4 en charge de la détermination de la trajectoire d'évitement. Selon ce mode de réalisation particulier, lorsqu'un tel drone 1 croise un aéronef intrus 10 équipé d'un système TCAS II et qu'un risque de collision est détecté par celui-ci, le drone 1, qui a préalablement détecté le fait que l'aéronef intrus 10 est équipé d'un système TCAS II, se met en attente de l'émission d'un avis de résolution RA par le TCAS II de l'aéronef intrus 10 (étape 27). A réception de cet avis de résolution RA, le système d'analyse de données 4 analyse la teneur de l'avis de résolution RA émis par le système TCAS II de l'avion intrus 10 (étape 32). Si cet avis de résolution RA comprend une consigne de montée de l'aéronef intrus 10, la trajectoire d'évitement déterminée par le système d'analyse de données 4 est descendante (étape 33). Dans le cas contraire, la trajectoire d'évitement comprend un virage dans un plan horizontal (étape 34). Les manoeuvres d'évitement ainsi déterminées sont mises en oeuvre immédiatement après émission du RA (étapes 35 et 36).

Le procédé selon le deuxième mode de mise en oeuvre est par ailleurs identique au procédé selon le premier mode de mise en oeuvre.

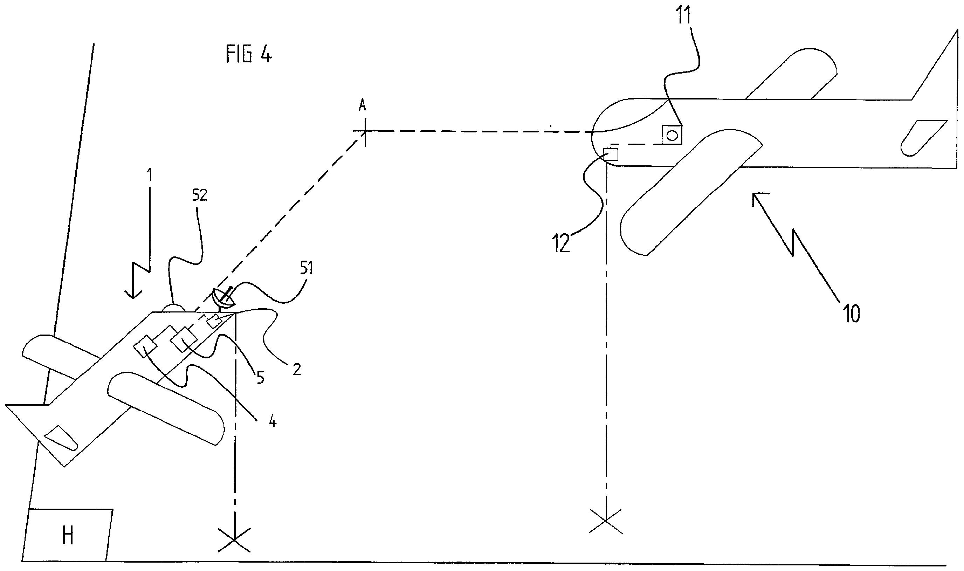

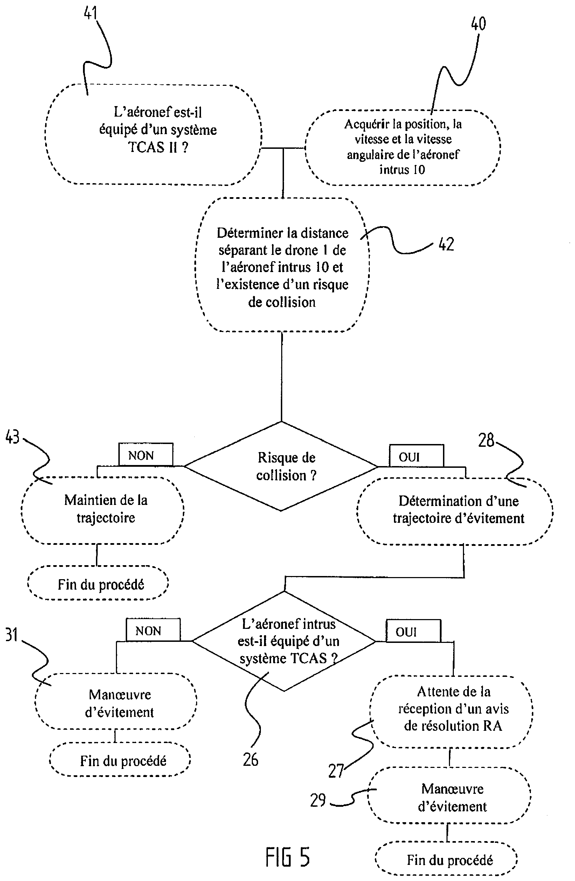

En référence aux figures 4 et 5, un troisième mode de réalisation du procédé selon l'invention est décrit. Selon ce mode de réalisation, le drone 1 est équipé d'un transpondeur mode S 2, d'un système automatisé d'analyse de données 4 connecté à un système de contrôle de vol 5, d'un radar 51 et de la seule partie « réception » 52 de l'interrogateur de transpondeur 13. A l'entrée de l'avion intrus 10 dans la zone de détection du radar 51, celui-ci acquiert la position de l'aéronef intrus 10, son cap, sa vitesse, son altitude ainsi que sa vitesse angulaire dans un plan horizontal (étape 40). En effet, dénué de la capacité d'interroger le transpondeur 12 de l'avion intrus 10, le drone 1 ne peut recueillir les informations relatives à la position de celui-ci que par mesure directe. Parallèlement à ces mesures, la partie « réception » 52 de l'interrogateur de transpondeur 13 est à l'écoute de l'environnement radioélectrique et peut donc recevoir des messages émis par l'avion intrus 10 en réponse à des sollicitations d'autres aéronefs ou d'unités de contrôles au sol. Ces messages peuvent comprendre des informations relatives à l'identification de l'aéronef (émises par un transpondeur mode A) et/ou son altitude, son cap, sa vitesse et le fait qu'il possède un système TCAS (émises par un transpondeur mode C). Ceci correspond à l'étape 41.

Au fur et à mesure de leur acquisition, ces informations sont traitées par le système d'analyse de données 4 afin de déterminer la distance séparant le drone 1 de l'avion intrus 10 et l'existence ou non d'un risque de collision (étape 42). Ces informations sont mises à jour en permanence et les étapes 40 à 42 sont répétées en boucle, pour chaque aéronef entrant dans la portée du radar 51. Si aucun risque de collision n'est détecté, le drone 1 maintient sa trajectoire initiale (étape 43). En cas de risque de collision identifié, le système d'analyse 4 détermine une trajectoire d'évitement (étape 44) sur la base de la dernière mise à jour des informations relatives à la position et au mouvement de l'avion intrus 10. Si le drone 1 a déterminé que l'avion intrus 10 n'est pas équipé d'un système TCAS, la manoeuvre d'évitement est effectuée immédiatement. Dans le cas contraire, c'est-à-dire si le drone 1 a détecté que l'avion intrus 10 est équipé d'un système TCAS, le drone 1 maintient sa trajectoire jusqu'à ce que la partie « réception » 52 de l'interrogateur de transpondeur 13 reçoive un avis de résolution RA. Pendant cette période, les informations relatives à la position de l'aéronef ainsi que les étapes 40 à 42 du procédé sont répétées en boucle de manière à adapter la manoeuvre d'évitement et la pertinence de sa réalisation aux éventuels changement de trajectoire de l'aéronef intrus 10 et/ou de l'apparition d'un second aéronef intrus dans la portée du radar 51.

Bien entendu, l'invention n'est pas limitée aux modes de réalisation décrits mais englobe toute variante entrant dans le champ de l'invention telle que définie par les revendications.

En particulier :
- bien que les moyens de mesure de la vitesse angulaire de l'avion intrus 10 comprennent des moyens radio sous la forme d'antennes à capacité goniométrique 3 ou un radar 51, l'invention s'applique également à d'autres moyens de mesure de la vitesse angulaire comme par exemple au moins un capteur optronique comme une caméra, un dispositif de télédétection par laser (Lidar) ou tout autre moyen permettant d'obtenir une mesure de vitesse angulaire appropriée pour permettre la mise en oeuvre du procédé;
- bien que l'invention ait été décrite en relation avec l'évitement d'un avion, le procédé selon l'invention s'applique également à l'évitement d'autres types d'aéronefs tels que par exemple des ballons dirigeables, des planeurs ou des ULM ;
- bien que l'indication émise par le drone 1 vers l'avion intrus 10 sur sa capacité à manoeuvrer comprenne, ici, l'indication «peu manoeuvrant », le procédé selon l'invention s'applique également à l'émission d'autres messages sur la capacité du drone à manoeuvrer comme par exemple « drone », « non manoeuvrant » ou « manoeuvrant en descente exclusivement » ; le drone pourrait également n'émettre aucune indication de ce type ;
- bien qu'ici l'acquisition de la position de l'aéronef intrus soit effectuée par recueil des informations émises par son transpondeur de mode C à la requête du drone, ou par mesure directe par radar, l'invention s'applique également à d'autres moyens d'acquisition de la position comme par exemple au moins un capteur optronique comme une caméra, un dispositif de télédétection par laser (Lidar) ou tout autre moyen permettant d'obtenir une acquisition de position appropriée pour permettre la mise en oeuvre du procédé;
- bien qu'ici la détermination du fait que l'aéronef intrus est ou non équipé d'un système TCAS soit effectuée par analyse de la réponse de l'avion intrus à la première interrogation par le transpondeur du drone ou par écoute des émissions en réponse aux requêtes d'autres aéronefs ou d'unités de contrôle au sol, l'invention s'applique également à d'autres moyens de détermination du fait que l'aéronef intrus est ou non équipé d'un système TCAS tels qu'une écoute à l'aide d'un récepteur ADS-B ;
- bien qu'ici la détermination du fait que l'avion intrus est ou non équipé d'un système TCAS soit effectuée lors de la première interrogation de l'avion intrus par le transpondeur du drone, l'invention s'applique également à une détermination du fait que l'avion intrus est ou non équipé d'un système TCAS réalisée ultérieurement, par exemple dans le cas d'une écoute à l'aide d'un récepteur ADS-B. L'étape de déterminer si l'avion intrus est ou non équipé d'un système TCAS peut être également menée après détermination du risque de collision par les moyens connus, afin de limiter l'encombrement de l'espace radioélectrique.

L'ordre des étapes du procédé peut être modifié par rapport au procédé décrit et par exemple : la détermination de la présence d'un TCAS à bord de l'aéronef intrus peut être réalisée avant la détermination de la position de l'aéronef intrus ou la mesure de sa vitesse angulaire.

## Revendications

1. Procédé d'évitement d'un aéronef intrus (10) équipé d'un système TCAS par un drone aérien (1) dépourvu d'un système TCAS, ledit drone aérien (1) étant équipé d'un transpondeur de mode S (2), un interrogateur de transpondeur (13), des moyens d'acquisition de la position (2) et de mesure de la vitesse angulaire (3) d'un aéronef intrus (10), le transpondeur (2) et lesdits moyens étant reliés à un système de contrôle de vol (5), comprenant les étapes de :
- acquérir la position de l'aéronef intrus (10) afin de déterminer la distance séparant le drone aérien (1) de l'aéronef intrus (10) ;
- déterminer un risque de collision avec l'aéronef intrus (10) en mesurant la vitesse angulaire de l'aéronef intrus (10) dans un plan horizontal, ;
- déterminer que l'aéronef intrus (10) est équipé d'un système TCAS à l'aide dudit transpondeur de mode S, et le cas échéant, recevoir un avis de résolution émis par le système TCAS de l'aéronef intrus (10)
- déterminer une trajectoire d'évitement après réception de l'avis de résolution, l'étape de déterminer une trajectoire d'évitement comprend une opération préalable d'analyse de l'avis de résolution émis par le TCAS de l'aéronef intrus (10) de telle manière que si cet avis comprend une consigne de montée de l'aéronef intrus 10, la trajectoire d'évitement est descendante et comprend, dans le cas contraire, un virage dans un plan horizontal, la trajectoire d'évitement se faisant dans une direction prenant en compte la vitesse angulaire de l'aéronef intrus ;.
- effectuer la trajectoire d'évitement.

2. Procédé selon la revendication 1, comprenant l'étape supplémentaire de transmettre au TCAS ce l'aéronef intrus (10) une indication sur une capacité du drone aérien (1) à manoeuvrer.

3. Procédé selon la revendication 1, dans lequel la trajectoire d'évitement comprend un virage à droite dans un plan horizontal.

4. Drone aérien (1) dépourvu de système TCAS et équipé d'un transpondeur de mode S (2), un interrogateur de transpondeur (13), des moyens d'acquisition de la position (2) et de mesure de la vitesse angulaire (3) d'un aéronef intrus (10), le transpondeur (2) et lesdits moyens étant reliés à un système de contrôle de vol (5) agencé pour mettre en oeuvre le procédé conforme à l'une quelconque des revendications précédentes.

5. Drone aérien (1) selon la revendication 4, dans lequel les moyens de mesure de la vitesse angulaire (3) de l'aéronef intrus (10) dans un plan horizontal comprennent au moins un capteur optronique.

6. Drone aérien (1) selon la revendication 4, dans lequel les moyens de mesure de la vitesse angulaire (3) de l'aéronef intrus (10) dans un plan horizontal comprennent des moyens radio.

7. Drone aérien selon la revendication 6, dans lequel les moyens radio de mesure de la vitesse angulaire de l'aéronef intrus dans un plan horizontal comprennent des antennes à capacité goniométrique (3).

## Patentansprüche

1. Ausweichverfahren für eine Flugdrohne (1) ohne TCAS-System, um einem eindringenden Luftfahrzeug (10), das mit einem TCAS-System ausgestattet ist, auszuweichen, wobei die Flugdrohne (1) mit einem Mode-S-Transponder (2), einem Transponder-Abfragegerät (13) sowie Mitteln (2, 3) zum Erfassen der Position und zum Messung der Winkelgeschwindigkeit eines eindringenden Luftfahrzeugs (10) ausgestattet ist, wobei der Transponder und die genannten Mittel mit einem Flugüberwachungssystem (5) verbunden sind, umfassend die Schritte:
- Erfassen der Position des eindringenden Luftfahrzeugs (1), um den Abstand zu bestimmen, der die Flugdrohne (1) von dem eindringenden Luftfahrzeug (10) trennt;
- Bestimmen eines Kollisionsrisikos mit dem eindringenden Luftfahrzeug (10) durch Messen der Winkelgeschwindigkeit des eindringenden Luftfahrzeugs (10) in einer horizontalen Ebene;
- Bestimmen mittels des genannten Mode-S-Transponders, ob das eindringende Luftfahrzeug (10) mit einem TCAS-System ausgestattet ist, und gegebenenfalls Empfangen einer Ausweichempfehlung, die von dem TCAS-System des eindringenden Luftfahrzeugs (10) gesendet wird;
- Bestimmen einer Ausweichflugbahn nach Empfang der Ausweichempfehlung, wobei der Schritt des Bestimmens einer Ausweichflugbahn einen vorherigen Analysevorgang der Ausweichempfehlung umfasst, die von dem TCAS des eindringenden Luftfahrzeugs (10) gesendet wurde, derart, dass, wenn diese Empfehlung eine Steiganweisung für das eindringende Luftfahrzeug (10) umfasst, die Ausweichflugbahn absteigend ist und im umgekehrten Fall eine Kurve in einer horizontalen Ebene umfasst, wobei die Ausweichflugbahn in einer Richtung erfolgt, die die Winkelgeschwindigkeit des eindringenden Luftfahrzeugs berücksichtigt;
- Ausführen der Ausweichflugbahn.

2. Verfahren nach Anspruch 1, umfassend den zusätzlichen Schritt des Übertragens einer Information an das TCAS des eindringenden Luftfahrzeugs (10) über eine Manövrierfähigkeit der Flugdrohne (1).

3. Verfahren nach Anspruch 1, bei der die Ausweichflugbahn eine Rechtskurve in einer horizontalen Ebene umfasst.

4. Flugdrohne (1), die ohne ein TCAS-System ist und mit einem Mode-S-Transponder (2), einem Transponder-Abfragegerät (13) sowie Mitteln (2, 3) zum Erfassen der Position und zum Messen der Winkelgeschwindigkeit eines eindringenden Luftfahrzeugs (10) ausgestattet ist, wobei der Transponder (2) und die genannten Mittel mit einem Flugüberwachungssystem (5) verbunden sind, das ausgebildet ist, um das Verfahren gemäß einem der vorhergehenden Ansprüche durchzuführen.

5. Flugdrohne (1) nach Anspruch 4, bei der die Mittel (3) zum Messen der Winkelgeschwindigkeit des eindringenden Luftfahrzeugs (10) in einer horizontalen Ebene mindestens einen optoelektronischen Sensor umfassen.

6. Flugdrohne (1) nach Anspruch 4, bei der die Mittel (3) zum Messen der Winkelgeschwindigkeit eines eindringenden Luftfahrzeugs (10) in einer horizontalen Ebene Funkmittel umfassen.

7. Flugdrohne nach Anspruch 6, bei der die Funkmittel zum Messen der Winkelgeschwindigkeit eines eindringenden Luftfahrzeugs in einer horizontalen Ebene Peilantennen (3) umfassen.

## Claims

1. Method for the avoidance of an intruding aircraft (10) equipped with a TCAS system by an aerial drone (1) not equipped with a TCAS system, said aerial drone (1) being equipped with a mode S transponder (2), a transponder interrogator (13), and means (2) for acquiring the position of an intruding aircraft (10) and (3) for measuring its angular velocity, the transponder (2) and said means being connected to a flight control system (5), comprising the steps of:
- acquiring the position of the intruding aircraft (10) in order to determine the distance separating the aerial drone (1) from the intruding aircraft (10),
- determining a risk of collision with the intruding aircraft (10) by measuring the angular velocity of the intruding aircraft (10) in a horizontal plane,
- determining whether the intruding aircraft (10) is equipped with a TCAS system with the help of said mode S transponder and, if it is so equipped, receiving a resolution advisory emitted by the TCAS system of the intruding aircraft (10),
- determining an avoiding flight path following reception of the resolution advisory, the step of determining an avoiding flight path comprises a preliminary operation of analysing the resolution advisory emitted by the TCAS of the intruding aircraft (10) in such a way that, if said advisory comprises an instruction for the intruding aircraft (10) to climb, the avoiding flight path is descending and, if said advisory does not, it comprises a turn in a horizontal plane, the avoiding flight path being in a direction which takes the angular velocity of the intruding aircraft (10) into account,
- flying the avoiding flight path.

2. Method according to claim 1 comprising the additional step of transmitting to the TCAS of the intruding aircraft (10) an indication of the manoeuvrability of the aerial drone (1).

3. Method according to claim 1, wherein the avoiding flight path comprises a turn to the right in a horizontal plane.

4. Aerial drone (1) not equipped with a TCAS system but equipped with a mode S transponder (2), a transponder interrogator (13), and means (2) for acquiring the position of an intruding aircraft (10) and (3) for measuring its angular velocity (3), the transponder (2) and said means being connected to a flight control system (5) which is adapted to carry out the method to any one of the preceding claims.

5. Aerial drone (1) according to claim 4, wherein the means (3) for measuring the angular velocity of the intruding aircraft (10) in a horizontal plane comprise at least one optronic sensor.

6. Aerial drone (1) according to claim 4, wherein the means (3) for measuring the angular velocity of the intruding aircraft (10) in a horizontal plane comprise radio means.

7. Aerial drone (1) according to claim 6, wherein the radio means for measuring the angular velocity of the intruding aircraft in a horizontal plane comprise antennas having a direction-finding capability (3).
